# EUROPEAN PATENT APPLICATION

(11) **EP 0 579 368 A1**
(43) Date of publication of application: **19.01.1994**
(21) Application number: 93304305.1
(22) Date of filing: 03.06.1993
(51) Int. Cl.: G06F 15/403

(54) **File system for a computer**

(30) Priority: 17.07.1992 US 916031
(71) Applicant: INTERNATIONAL COMPUTERS LIMITED, Putney, London, SW15 1SW (GB)
(72) Inventor: Curtis, Bruce William, Laguna Niguel, CA 92677 (US); Ellis, William Ogden, Lake Forest, CA 92630 (US)
(74) Representative: Guyatt, Derek Charles

(57) **Abstract**

A file system for a computer, provides the ability to establish a view, consisting of a number of layers, where each layer consists of a set of directories and files arranged in a tree structure. For file look-up, each layer selected in turn, starting from the topmost layer until a file with the required name is located. Thus, the file structure appears to the user as a set of transparent layers, with files in lower layers being visible through the higher layers unless there is a file with the same name in a higher layer.

## Description

### Background to the Invention

This invention relates to a file system for a computer. The invention is particularly, although not exclusively, concerned with a file system for use in a computer running under the UNIX operating system. (UNIX is a registered trade mark of UNIX System Laboratories Inc).

The traditional UNIX concept of a file system is a hierarchical structure of directories, each capable of containing files and/or sub-directories. A tree in the file system consists of a base directory in the file system and all the files and sub-directories recursively contained in that directory. The base directory is normally referred to as the root of the tree.

Such a traditional file system can be thought of as a two-dimensional structure in which files within directories form the X-axis and the directories within the tree form the Y-axis.

A file system may, for example, hold a set of source code files for a complex software system. Such software systems are usually developed by large teams of programmers, working in parallel and it is a requirement that these programmers should have access to the file system, to allow them to create, update and delete files as the development proceeds. However, this presents problems of coordination and of ensuring consistency.

Development tools or environments are available on the market which enable each programmer to take a copy of the original source code to work on. After the programmers have made the desired changes, all the various copies are merged back together again. However, this copy technique has several disadvantages. Although work progresses in parallel, the changes are made in serial manner, so that changes made on one copy may be adversely affected by changes in another. Hence, change control can be a serious problem. Moreover, the multiple copies of the source code take up large amounts of valuable disk space.

The object of the present invention is to provide a novel file system which eliminates or reduces these problems.

### Summary of the Invention

According to the invention there is provided a file system for a computer, comprising
(a) means for creating at least one file view comprising a plurality of layers, each layer comprising a tree-structured set of directories and files, and
(b) means for accessing a file having a specified name by searching the directories and files in each layer in turn, in a predetermined order, until a file is found with the specified name.

It will be shown that, in such a file system, a user accessing a view effectively sees a composite file structure, comprising the union of the directories and files in all the layers. Files in the lower layers of a view are visible unless there is a file of the same name in a higher level.

Different users may have access to the file system by way of different views. The lower layers of the views may contain more trusted data (eg source code that has been tested and accepted) and are shared between the different views. The top layer of each view may contain less trusted data (eg source code currently being developed or modified), and may be unique to the particular view (ie not shared between views). It will be seen that, in such a system, each user can freely modify the files in the top layer of that user's own view, without affecting the views of other users, changes being moved to a lower level only when they have been tested and approved. However, each user sees a complete file system, including any changes that have been incorporated into the lower levels. Furthermore, because the lower levels are shared, the storage requirement may be considerably reduced.

Preferably, the system includes a directory look-up cache to provide for fast look-up of files. This especially important for look-up of files in the deeper layers of the view.

A file system embodying the invention will hereinafter be referred to as "Z-axis file system", since it extends the traditional concept of a file in a directory (X-axis) and a directory in a tree (Y-axis) to a tree in a view (Z-axis).

### Brief Description of the Drawings

Figure 1 is a block diagram of the hardware of a multi-user computer system including a file system in accordance with the invention.

Figure 2 is a block diagram showing software components of the computer system.

Figure 3 is a diagram showing the structure of files and directories in the file system.

Figure 4 is a diagram showing how the file structure illustrated in Figure 3 appears to a user.

### Description of an Embodiment of the Invention

One computer system embodying a file system in accordance with the invention will now be described by way of example with reference to the accompanying drawings.

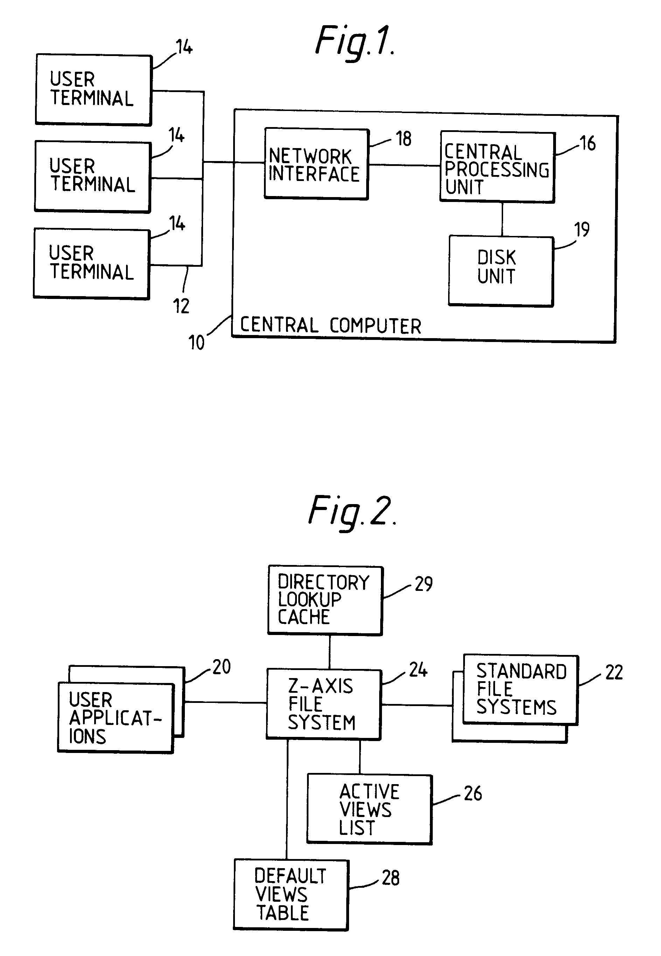

Referring to Figure 1, the system comprises a central computer 10, connected by way of a communications network 12 to a number of user terminals 14. The central computer includes a central processing unit 16, a network interface 18 for interfacing with the network 12, and a disk unit 19 for storing programs and data. The central computer 10 may comprise a known computer such as an ICL DRS 6000 computer, running under the UNIX operating system.

Referring now to Figure 2, the computer 10 runs a number of programs referred to herein as user applications 20. The nature of these programs forms no part of the present invention and so they will not be described further.

The system also includes one or more standard file systems 22, which may be conventional file systems such as a local file system (SVR4 UFS) or a distributed file system (SVR4 NFS). Again, the nature of the standard file systems forms no part of the present invention and so will not be described further.

All access from the user applications 20 to the standard file systems 22 takes place through a module referred to as the Z-axis file system (ZFS) 24. The ZFS 24 receives all UNIX system file calls, preprocesses them, and passes them on to the standard file systems 22.

The ZFS 24 extends the standard file systems 22, so as to provide the facility for creating, accessing and deleting data structures referred to herein as ZFS views, as will be described.

The ZFS 24 has access to tables referred to as the active views list 26, default views table 28, and the directory look-up cache 29, the purpose of which will be described.

### ZFS Views

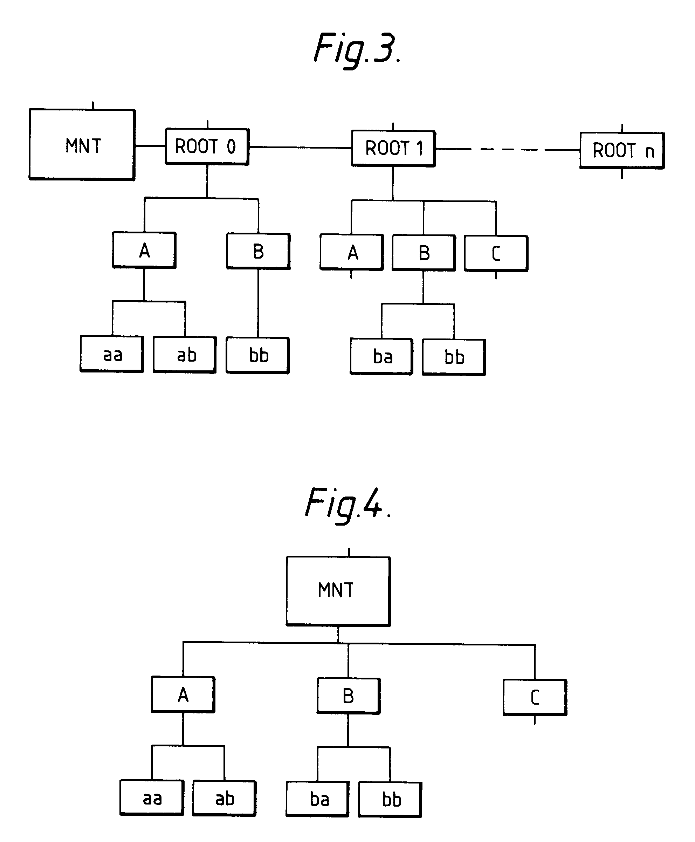

Referring now to Figure 3, this shows a typical ZFS view by way of example.

Each ZFS view comprises a vector of one or more trees, each tree within the view being identified by a number referred to herein as the view vector index number (0 to n). Each of these trees has a root directory (ROOT 0, ROOT 1 ... ROOT n) and comprises directories (A, B ) and files (aa, ab ...) arranged logically in a tree structure.

The tree with view vector index 0 is referred to as the local tree. Each view must contain a local tree. By default, all file and directory creations take place in this local tree, subject to the normal UNIX permissions mechanism.

Trees with view vector index 1 or more are referred to as global trees. A view may contain zero, one or more global trees (ie global trees are optional). Global trees are considered to be globally shared resources (ie shared between all users) and are used, by default, for file or directory look-ups only.

The ZFS view thus consists of a number of layers, each layer comprising a set of files and directories arranged in a tree structure. The topmost level (0) is local to a user, while the lower levels (1-n) are shared with other users.

It should be noted that sub-directories or files with the same name in different layers do not necessarily contain the same information. For example, in Figure 3, directory B in layer 0 contains a single file (bb) while directory B in layer 1 contains two files (ba and bb). Also, the file bb in layer 0 may be different from the file in bb in layer 1: it may for example be a modified version.

### View Establishment

A ZFS view may be established by means of a zmount command which is a modified version of the conventional UNIX mount command. Unlike mount, zmount can be executed by any user to establish a view.

The zmount commandspecifies the view as a list of paths to the root directory (ROOT 0) of the local tree and, optionally, to the root directories (ROOT 1 ... ROOT n) of one or more global trees. The zmount commandalso specifies a directory, referred to herein as the mount directory MNT, on which the ZFS view is to be mounted. The mount directory must be owned by the user of the zmount command.Otherwise the command fails and an error message is returned. However, zmount may be used by the superuser to establish a view on any mount directory, whether or not it is owned by the superuser.

Once a view has been established by zmount, it becomes a system resource and can be used by any user, subject to the normal UNIX permissions. In particular, a view is not affected by termination of the user session of the user who established the view.

When a view is established, the definition of the view is put into an entry in the active views list 26. Each entry in the list is identified by a view identity (vid).

Default ZFS views can be specified by the default views table 28. For each default view, the table 28 specifies the run level at which the view is to be established, the path names of the trees that are to form the view, and the name of the mount directory. It also optionally specifies the name of the user who is to own the view.

On system start-up, the init command automatically accesses the table 28 and establishes any specified default views.

It should be noted that any view can contain entire layers or sub-trees of layers mounted from a remote system (in UNIX SVR4 via either NFS or RFS distributed file systems) or from another ZFS view (a sub-mount). Also, any view can be shared from a server machine and mounted on a remote machine (via NFS or RFS).

This allows for complete generality in composing views which access files from local or remote machines and can themselves be accessed on remote machines as well as locally.

### Termination

An established ZFS view may be terminated by means of a zumount command, which is a modified version of the conventional UNIX umount command. Unlike umount, zumount, can be executed by any user.

The zumount commandhas three options:
(a) The command attempts to terminate all views owned by the user who calls zumount.
(b) The command attempts to terminate the view specified by a particular view identity (vid).
(c) The command attempts to terminate the view currently mounted on a specified mount directory.

The zumount commandmay be used only to terminate a view mounted on a directory owned by the user who calls the command. Otherwise, the command fails, and an error message is returned. However, the superuser may terminate any view.

After a ZFS view has been established by zmount, the ownership of the mount directory may be changed by the conventional UNIX chown command. In this case, termination of the view can be performed only by the new owner, or by the superuser.

If the view specified by the zumount command is currently active (ie has open files or directories) it is not terminated immediately, but is scheduled to terminate when the view becomes idle.

When a view is terminated, the corresponding entry is deleted from the active views list 26.

### White-out Files

A ZFS view may contain files of a special type referred to as white-out files, which are used to hide the existence of normal files or directories. The file or directory that is hidden is referred to as the whited-out file or directory.

The name of a white-out file is the name of the whited-out file or directory, with the two character ASCII sequence ".<CAN>" prepended.

### File Look-up

A system call may reference a file in a ZFS view by name. For example, the file aa in Figure 3 may be referenced by the path name ... /MNT/A/aa. A path name may unqualified, or may have one or more qualifiers appended to it.

If the path name is unqualified, the ZFS processes the call as follows.

First, the local tree (view vector index 0) is selected, and that tree is referenced in the conventional manner. If a file with the specified name is found in that tree, the look-up is terminated. Look-up is also terminated if a white-out file with a corresponding name is found. Otherwise, each global tree is selected in turn and the process is repeated.

In other words, each layer of the view is examined in turn, starting from the topmost layer (0), until either the desired file is located or a corresponding white-out file is found. Thus, a file is accessed from the highest layer in which a file of the required name occurs. For example, in Figure 3 the files aa, ab and bb will be accessed from layer 0, while the file ba will be accessed from layer 1.

The ZFS view therefore appears to the user as a series of transparent layers, with each file or sub directory visible through the layers above it, unless there is a file of the same name or a white-out file in a higher layer. The user effectively sees a combined file structure consisting of the union of the directories and files in all the layers. For example, Figure 4 shows the way in which the ZFS view of Figure 3 appears to the user. In other words, Figure 4 shows the virtual file structure.

When a directory has been accessed in order to look-up a file, whether or not the file is found, the directory is stored in the directory look-up cache 29, so that the next time a file is looked up in that directory, its existence can be immediately verified.

As mentioned above, a path name may have one or more qualifiers appended to it. Possible qualifiers are: range qualifier; whited-out visible qualifier; and white-out visible qualifier.

A range qualifier specifies a range of view vectors. In this case, file look-up is performed in the same manner as described above for an unqualified path name, except that only the trees in the specified range are selected. In other words, only those files in a particular set of layers of the view are visible.

If the path name has whited-out visible qualifier appended to it, then any white-out files are ignored so that if the required file was whited-out, it now becomes visible.

If the path name has a white-out visible qualifier appended to it, then any white-out files with names corresponding to that file name are made visible.

### File and Directory Creation

A user application may call the file system to create a new file or directory with a specified path name in a view. The path name may optionally have one or more qualifiers appended to it as specified above.

If the path name is unqualified, the ZFS processes the call as follows.

The ZFS attempts to create the file or directory in the local tree (view vector index 0) of the view. If the creation fails because one or more directories in the path to the specified file or directory do not exist in the local tree, then any missing directories that exist in other trees of the view are automatically created in the local tree, provided that their access permissions allow this, and file creation is attempted again. If a missing directory cannot be found in another tree, or cannot be created, the file or directory creation fails.

For example, in Figure 3, if it is desired to create a file with path name ... /MNT/C/ca, this initially fails because the directory C does not exist in layer 0. The ZFS therefore creates the directory C in layer 0, and then creates file ca under this directory in layer 0.

If a white-out file exists in the local tree, the creation process is affected by the existence of any whited-out file or directory in the local tree in the following ways:

If no whited-out file or directory exists, the white-out file is removed before creation.

If a whited-out file exists, then both the whited-out file and the whited-out file are removed before creation.

If a whited-out directory exists, creation of a file or directory fails, with an error message indicating that the directory exists. The white-out file is then removed, uncovering the previously whited-out directory.

If the path name has a range qualifier appended to it, the creation procedure is as described above, except that it is attempted in the first tree of the specified view vector index range.

If the path name is qualified by a whited-out visible qualifier, any white-out files are ignored.

If the path name is qualified by a white-out visible qualifier, then a white-out file is created.

### File and Directory Removal

A user application may call the file system to delete an existing file or directory with a specified path name. The path name may optionally have one or more of the qualifiers appended to it as specified above.

If the path name is unqualified, the ZFS processes the call as follows.

The ZFS attempts to remove the file or directories from the local tree. If the attempt succeeds, then any directories that have become empty as a result are automatically removed, from the local tree, provided that those directories also exist in lower layers of the view.

For example, in Figure 3, if the file bb is removed from layer 0, the directory B in that layer becomes empty, and is also removed, since directory B also exists in layer 1.

If the specified file or directory does not exist in the local tree, then the removal process fails, with an error message indicating that the file or directory does not exist.

If the path name has a range qualifier appended to it, the removal procedure is as described above, except that it is attempted in the first tree of the specified view vector index range.

If the path name has a whited-out visible qualifier appended to it, then any white-out files are ignored.

If the path name has a white-out visible qualifier appended to it, then a white-out file is removed.

### Directory Read

A user application may call the file system to return a directory of all files and/or sub-directories in a particular directory, specified by a path name. The path name may optionally have one or more qualifiers appended to it.

If the path name is unqualified, the ZFS processes the call as follows.

The ZFS selects each tree in turn, starting from the local tree, and returns the first occurrence of any files or sub-directories within the specified directory. Any white-out files, or whited-out files and directories are not returned. Thus, it can be seen that the directory read returns an exclusive virtual directory, representing the effective file structure (eg as shown in Figure 4).

If the path name has an inclusive range qualifier appended to it, an inclusive virtual directory is returned, including all occurrences of all the files in the specified directory within the specified range of trees. Any white-out files or whited-out files and directories are not returned. To differentiate multiple occurrences of a file name in different trees, each file name is returned with its view vector index number appended to it.

If the path name has an exclusive range qualifier appended to it, an exclusive virtual directory is returned, including only the first occurrence of each file in the specified directory within the specified range of trees.

If the path name has a whited-out visible qualifier appended to it, then any white-out files are ignored so that whited-out files and directories are returned as well as normal ones. To differentiate whited-out files and directories, these names are returned with a qualifier "+" appended to them.

If the path name has a white-out visible qualifier appended to it, white-out files are returned with a qualifier "++" appended to their names.

### Example of Use

The system described above may be used for example to hold a set of source code files for a complex software system that is being developed by a large team of programmers.

When a programmer wishes to develop or modify part of the source code, a view is established for the programmer to access the files. The topmost layer of this view (the local tree) contains those files that the programmer intends to work on.

The other files are distributed between the other layers in such a manner that more trusted files reside in the deeper layers (ie those with higher view vector index numbers).

The programmer can freely modify, create and remove files in the topmost layer, without affecting any of the other files. If the programmer wishes to investigate the effect of removal of a file in lower layer, this can be done by creating a white-out file in the topmost layer to cover that file.

When all the modifications and additions in the topmost layer have been thoroughly tested and approved, these can be moved to a lower layer (by use of the range qualifier options mentioned above).

The directory look-up cache 29 in figure 2 provides for fast look-up of those source files which are, in fact, found in the deeper layers of the view. This is critical for effective processing, such as compiling, of the source code files.

## Claims

1. A file system for a computer, comprising
(a) means for creating at least one file view comprising a plurality of layers, each layer comprising a tree-structured set of directories and files, and
(b) means for accessing a file having a specified name by searching the directories and files in each layer in turn, in a predetermined order, until a file is found with the specified name.

2. A file system according to Claim 1 further including means operative when accessing a file view for permitting only the files and directories in the topmost layer of the view to be modified.

3. A file system according to Claim 1 or 2 further including means for creating a new file in the topmost layer of the view and means for automatically creating any required directory in that layer for the new file provided that the directory already exists in a lower layer of the view.

4. A file system according to any preceding claim further including means for deleting a file from the topmost layer of the view and means for automatically deleting any directories from topmost layer that become empty as the result of deletion of said file, provided that those directories also exist in a lower layer of the view.

5. A file system according to any preceding claim wherein at least one of said files comprises a white-out file, and including means for automatically terminating a search for a file in the event that a white-out file is encountered, whereby the presence of a file is effectively masked by a white-out file in a higher layer of the view.

6. A file system according to and preceding claim, further including a directory look-up cache for storing recently used directory information.

7. A method for accessing files within a computer system comprising:
(a) organizing the files as at least one file view, comprising a plurality of layers, each layer comprising a tree-structured set of directories and files, and
(b) accessing a file having a specified name by searching the directories and files in each layer in turn until a file is found with the specified name.

8. A method according to Claim 7 including the steps of creating a new file in the topmost layer of the view and automatically creating a directory in that layer for the new file provided that the directory already exists in a lower layer of the view.

9. A method according to Claim 7 or 8 including the steps of deleting a file from the topmost layer of the view and automatically deleting any directories from the topmost layer that become empty as a result of deletion of said file provided that those directories also exist in a lower layer of the view.

10. A method according to any one of Claims 7 to 9 comprising the steps of creating a white-out file in a layer of the view, and automatically terminating a search for a file in the event that a white-out file is encountered, whereby the presence of a file is effectively masked by a white-out file in a higher layer of the view.
